## Europäisches Patentamt
## European Patent Office
## Office européen des brevets

(11) Publication number: **0 471 088 A1**

# EUROPEAN PATENT APPLICATION
## published in accordance with Art. 158(3) EPC

(21) Application number: **91904818.1**

(22) Date of filing: **04.03.91**

(86) International application number: **PCT/JP91/00286**

(87) International publication number: **WO 91/13774 (19.09.91 91/22)**

(51) Int. Cl.⁵: **B60C 9/08**, B60C 9/18, D02G 3/48, D01F 8/12

(30) Priority: **06.03.90 JP 52584/90**
**06.03.90 JP 52586/90**

(43) Date of publication of application: **19.02.92 Bulletin 92/08**

(84) Designated Contracting States: **DE ES FR GB IT LU**

(71) Applicant: **Bridgestone Corporation 10-1, Kyobashi 1-Chome Chuo-Ku Tokyo 104(JP)**

(72) Inventor: **YAMAMOTO, Masahiko, 5-5,Ogawa-higashi-cho 3-chome Kodaira-shi Tokyo 187(JP)**
Inventor: **KIKUCHI, Michitugu, 9-5-308, Shimorenjaku 9-chome Mitaka-shi Tokyo 181(JP)**

(74) Representative: **Whalley, Kevin MARKS & CLERK 57/60 Lincoln's Inn Fields London WC2A 3LS(GB)**

(54) **PNEUMATIC RADIAL TIRE.**

(57) A pneumatic radial tire comprising: at least a carcass ply layer (4) having cords substantially in a radial arrangement; a plurality of belt layers (2, 3); a tread layer (1); and a cap layer (5) covering at least an end portion of a belt, including a reinforcing layer, in which cords are arranged in parallel to the circumferential direction of the tire. Cords in the carcass layer (4) and/or the cap layer consist of twisted synthetic filaments having a core-sheath construction consisting of a core portion (11) and a sheath portion, polymer constituting the core portion (11) is a mixture of polyester of 70 - 99 wt% and polyamide of 30 - 1 wt%, polymer constituting the sheath portion (12) is polymer containing therein at least 70 wt% of polyamide, and the core portion (11) accounts for 30 - 90 wt% of the total combined weight of the core portion and the sheath portion. By use of these fibrous cords, the tire can be improved in service durability and reduce the noise level.

## FIG_1

## FIG_3a

TECHNICAL FIELD

The present invention relates to pneumatic radial tires reinforced with high strength tire-reinforcing fibers, and more particularly to a pneumatic radial tire reinforced with high strength tire-reinforcing fibers having excellent adhesion property to rubber, heat resistance in rubber, fatigue resistance and the like, and having an improved high-speed durability.

BACKGROUND ART

Polyester fibers typified by polyethylene terephthalate fiber have high strength and modulus of elasticity, so that they are widely used as various industrial materials. Particularly, they are usable as a tire cord.

However, the polyester fibers have problems that the heat resistance in rubber is usually poor, and the ester bond portion of the polyester fiber is cut through the action of water or amine compound in rubber at high temperature to cause the decrease of strength and the adhesion property to rubber is poor and particularly the adhesion force to rubber is decreased when being repeatedly exposed to a high temperature atmosphere for a long time.

On the other hand, there have hitherto been proposed many attempts for the improvement of the adhesion property being a drawback of polyester fibers as a rubber reinforcement. Among them, there is known a method of covering the surface of polyester fiber with a polyamide. For example, Japanese Patent laid open No. 49-85315 discloses a method for the production of composite fibers using polyester as a core and nylon-6 as a sheath, in which rubber reinforcing fibers having specified polymerization degree of each polymer component and ratio of core polymer are used as a material for tire reinforcement.

Similarly, Japanese Patent Application Publication No. 62-42061 discloses that rubber reinforcing fibers of core-sheath composite structure using polyester as a core portion and polyamide as a sheath portion, in which the amount of the polyamide sheath component is 70-30% by weight, are covered at their surfaces with an epoxy series adhesive and are used as a tire reinforcement.

Japanese Patent laid open No. 1-97211 discloses that rubber reinforcing fibers of sheath-core structure using polyester as a core portion and 66/6T copolyamide as a sheath portion, in which the copolymerizing amount of hexamethylene diammonium terephthalate in 66/6T copolyamide is rendered into not less than 5% by weight, preferably 10-40% by weight to improve the adhesion force in the boundary between polyester core portion and 66/6T copolyamide sheath portion, are used as a tire reinforcement.

In Japanese Patent laid open No. 1-97212 is disclosed that the adhesion property in the boundary is improved by rendering the polyester fiber of the core portion and the hexamethylene diammonium terephthalate fiber of the sheath portion into high-orientation and high-crystalline fiber structure and then such fibers are used to improve the tire performances.

In Japanese Patent Application Publication No. 49-85315 and No. 62-42061 is disclosed that the adhesion property to rubber being a drawback of the polyester fiber is improved by using polyamide in a sheath portion, which has an effect of restraining amine decomposition. Moreover, the boundary adhesion between the polyester core portion and the polyamide sheath portion is improved in Japanese Patent laid open No. 1-97211, but the sufficient improving effect is not recognized.

In the pneumatic tires using the conventional fiber of composite structure as a reinforcing member, therefore, the boundary between the core polymer and the sheath polymer is broken by repeatedly subjecting to stretch and compression fatigues during the running of the tire, and then the sheath portion is separated and broken, so that there is not developed the performance inherent to the core-sheath composite fiber.

It is an object of the invention to provide pneumatic radial tires reinforced with high strength composite fibers having excellent adhesion property to rubber and improved Young's modulus, dimensional stability, heat resistance in rubber and fatigue resistance and suitable as a material for rubber reinforcement, and more particularly to provide pneumatic radial tires having excellent high-speed running durability and reinforced with composite fibers for rubber reinforcement improving the adhesion force in the boundary between the core polymer and the sheath polymer and having a sufficient durability against the boundary separation between the core polymer and the sheath polymer and sufficiently developing the properties of the composite fiber over a long period of time.

DISCLOSURE OF INVENTION

The inventors have made various studies in order to solve the above problems and found that these problems can be solved by using cords each made of filaments having a sheath-core structure of particular components as a cord in at least one ply of carcass plies or at least one layer in cap layers, and as a result the invention has been accomplished.

That is, the invention lies in a pneumatic radial tire comprising at least one carcass ply containing cords arranged substantially in a radial direction, plural belt layers, a tread layer, and a reinforcing layer as a cap layer located between the belt layer and the tread layer and containing cords arranged in parallel to the circumferential direction of the tire and covering at least each end portion of the belt layer, characterized in that at least one layer of the carcass plies and/or the cap layer is formed by embedding in rubber cords obtained by twisting filaments of a sheath-core structure consisting of a core portion and a sheath portion of a polymer different from a polymer constituting the core portion, and the polymer constituting the core portion is a mixture of 70-99% by weight of polyester and 30-1% by weight of polyamide, and the polymer constituting the sheath portion is a polymer containing at least 70% by weight of polyamide, and the core portion occupies in an amount of 30-90% by weight with respect to a total weight of the core portion and sheath portion.

## BRIEF DESCRIPTION OF DRAWINGS

Fig. 1 is a right-half perspective view partly shown in section of an embodiment of the pneumatic radial tire according to the invention;

Fig. 2 is a right-half perspective view partly shown in section of another embodiment of the pneumatic radial tire according to the invention;

Figs. 3a to 3c are sectional views showing sectional shapes of embodiments of the fiber for tire reinforcement used in the pneumatic radial tire according to the invention; and

Figs. 4a to 4c are sectional views showing various arrangements of protrusion portions in the fiber for tire reinforcement used in the pneumatic radial tire according to the invention.

## BEST MODE FOR CARRYING OUT THE INVENTION

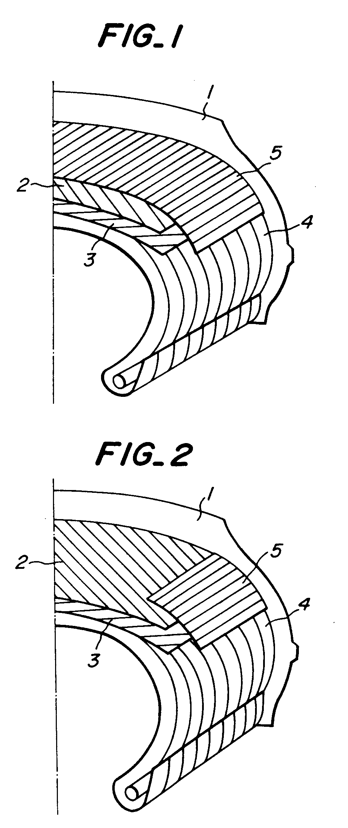

Fig. 1 is a right-half perspective view partly shown in section of a first preferable embodiment of the pneumatic radial tire according to the invention, wherein numeral 1 is a tread rubber layer, numerals 2, 3 belt layers, numeral 4 a carcass and numeral 5 a cap layer. In the illustrated tire, the belt layer is two belt plies each containing cords arranged at a cord angle of 10-40°, preferably 20-35° with respect to the circumferential direction of the tire, cords of which plies being crossed with each other, and a single cap layer 5 is arranged between the belt layer 2 near to a ground contacting portion and the tread layer 1 and has a width wider than the widths of the belt cord layers 2, 3 so as to cover the whole of the belt cord layers 2, 3 as a full cap layer. The number of the belt layers and the cap layer is not limited to only the illustrated embodiment and can be further increased, if necessary. Of course, the cord layers may be used by varying their widths, if necessary.

Fig. 2 shows a second preferable embodiment of the tire. In the illustrated tire, the cap layer 5 is separate-type in which the central portion of the cap layer shown in the tire of Fig. 1 is removed and is arranged so as to cover each end portion of each of the belt cord layers 2, 3 as a cap layer. The width and number of the cord layer can be varied, if necessary, and further the cord layer may be used by combining with the cord layer in the tire of Fig. 1.

Moreover, the pneumatic radial tire according to the invention comprises at least one carcass layer reinforced with rayon fiber cords, a tread layer covering the outside of the carcass layer, and belt layers located outside the carcass layer and in a crown portion inside the tread and containing cords arranged at a cord angle of 10-40°, preferably 20-35° with respect to the circumferential direction of the tire. It is desired that the belt layer is reinforced with aromatic polyamide fiber cords having a strength of not less than 10 g/d, steel cords and/or polyvinyl alcohol fiber cords having a strength of not less than 15 g/d.

Then, the filament of the sheath-core composite structure used in the pneumatic radial tire according to the invention consists of a mixture of 70-99% by weight of polyester and 30-1% by weight of polyamide as a polymer constituting the core portion and a polymer containing at least 70% by weight of polyamide as a polymer constituting the sheath portion, whereby the adhesion in the boundary between the core portion and the sheath portion can be more improved. The amount of polyamide in the core portion is preferably 5-30% by weight. When the amount of polyamide exceeds 30% by weight, the properties expected as the core portion polymer, particularly high modulus and dimensional stability are not developed. On the other hand, when the amount of polyamide is less than 1% by weight, the adhesion in the boundary between the core portion and the sheath portion is not improved. Moreover, the amount of not less than 5% by weight is preferable in view of the sufficient improvement of the adhesion property.

further, when the amount of polyamide in the polymer constituting the sheath portion is less than 70% by weight, the adhesion to rubber is not improved. The amount of polyamide in the sheath portion is preferably not less than 85% by weight. As the polymer other than polyamide, the use of polyester is preferable. It is usual that the sheath portion is made only of polyamide.

The polyester as a main component of the polymer constituting the core portion is preferable to be polyester consisting essentially of ethylene terephthalate unit and may contain a copolymerizable component to an extent that the physical and chemical properties of the polyethylene terephthalate polymer are not substantially lowered, for example, in an amount of less than 10%. As the copolymerizable component, use may be made of dicarboxylic acids such as isophthalic acid, naphthalene dicarboxylic acid, diphenyl dicarboxylic acid and the like; diols such as propylene glycol, butylene glycol and the like; and ethylene oxide and so on.

In order to provide a strength of not less than 7.5 g/d in the sheath-core composite fiber, the polyethylene terephthalate polymer in the core portion has a high intrinsic viscosity ($[\eta]$) of not less than 0.9, preferably not less than 0.9. Furthermore, in order to obtain excellent heat resistance of the sheath-core composite fiber in rubber, it is favorable that the concentration of terminal carboxyl group in the polyester as a main component of the core portion is not more than $20 \ eq/10^6$ g.

The polyamide used in a part of the core portion is favorable to be the same polyamide as used in the sheath portion mentioned later, but is not necessarily the same polyamide.

The polyamide used as the sheath component is a usual polyamide selected from polycapramide, polyhexamethylene adipamide, polytetramethylene adipamide, polyhexamethylene sebacamide, polyhexamethylene dodecamide and the like, among which polyhexamethylene adipamide series polymer is preferable. In order to obtain the composite fiber used in the invention, it is necessary that the polyamide polymer of the sheath portion has also a high conversion degree, and the relative viscosity in sulfuric acid ($\eta\Gamma$) is not less than 2.7, preferably not less than 3.0.

The amount of the core portion occupied in the sheath-core composite fiber used in the pneumatic tire according to the invention is 30-90% by weight. When the amount of the core portion is less than 30% by weight, it is difficult to render the modulus and dimensional stability as the composite fiber into the level of polyester. On the other hand, when the polyester core portion exceeds 90% by weight, the adhesion property of the composite fiber to rubber, heat resistance in rubber and the like are not sufficiently improved.

The composite fiber used in the invention is characterized by the fact that all of the core portion consisting of polyester and polyamide and the polyamide sheath portion are highly oriented and crystallized. That is, the birefringence ($\Delta n$) of polyester as a main component of the core portion is $160 \times 10^{-3}$-$190 \times 10^{-3}$. When it is less than $160 \times 10^{-3}$, the the strength (T/D) and initial tensile resistance degree (Mi) of the composite fiber can not be rendered into not less than 7.5 g/d and not less than 60 g/d, respectively. On the other hand, when it exceeds $190 \times 10^{-3}$, the dimensional stability and fatigue resistance are not improved. According to a novel method for the production of the composite fiber according to the invention as mentioned later, the birefringence never exceeds $190 \times 10^{-3}$.

On the contrary, the polyamide sheath portion has a birefringence ($\Delta n$) of not less than $50 \times 10^{-3}$, desirably not less than $53 \times 10^{-3}$ and is highly oriented. When the birefringence is less than $50 \times 10^{-3}$, composite fibers having a high strength and a high initial tensile resistance degree are not obtained.

The birefringence of the sheath-core composite fiber can be measured as follows. That is, the sheath portion is measured by means of a transmitted interference microscope as it is, while the core portion is measured by means of the transmitted interference microscope or by usual Berek compensator after the polyamide sheath portion is dissolved with formic acid, sulfuric acid, fluorinated alcohol or the like. The density is not less than 1.395 $g/cm^3$ in polyester as a main component of the core portion and not less than 1.135 $g/cm^3$ in polyamide of the sheath portion, so that these polymers are highly crystallized. If each of the densities is less than the above value, the dimensional stability and fatigue resistance of the composite fiber and the heat resistance in rubber are not improved.

Moreover, the density of polyester as a main component of the core portion is measured by dissolving and removing polyamide component with formic acid, sulfuric acid, fluorinated alcohol or the like. The density of polyamide in the sheath portion is determined by calculation from the density of the composite fiber, the density of the polyester component and the composite ratio, which is a value including the density of polyamide component constituting a part of the core portion.

Further, a structural feature of the composite fiber used in the invention is a peculiar dynamic viscoelastic behavior. The dynamic elastic moduli at 20°C and 150°C as measured at 110 Hz ($E'_{20}$, $E'_{150}$) are not less than $8 \times 10^4$ dyn/d and not less than $3 \times 10^4$ dyn/d, respectively. The dynamic elastic modulus at 20°C is slightly low as compared with that of polyester fiber and is dependent upon the amount of polyamide component, while the dynamic elastic modulus at a high temperature of 150°C may be equal to or more than that of polyester fiber. And also, a main dispersion peak temperature (T$\alpha$) in a dynamic loss tangent curve (tan $\delta$) is not lower than 140°C.

As mentioned above, the composite fiber used in the invention is considerably high in the dynamic elastic modulus (E'$_{20}$, E'$_{150}$) and main dispersion peak temperature (T$\alpha$) as compared with the case that the dynamic elastic modulus and peak temperature of usual nylon-6,6 are about $6 \times 10^4$ dyn/d, about $1.5 \times 10^4$ dyn/d and about 125°C, respectively. That is, the composite fiber is characterized by having the dynamic elastic modulus at high temperature (E'$_{150}$) and main dispersion peak temperature (T$\alpha$) equal to or more than those of the polyester fiber though a great amount of polyamide component is contained. The aforementioned dynamic viscoelastic behavior can not be explained only by the combination of the properties of the conventional polyester fiber and polyamide fiber and is said to be a peculiar effect developed by compositing both the polymer components according to the definition of the invention.

The composite fiber characterized by the above fiber structure and used in the invention has a high strength of not less than 7.5 g/d and an initial tensile resistance degree of not less than 60 g/d and exhibits a fiber property being a dry heat shrinkage ($\Delta S_{150}$) at 150°C of not more than 7%. As more preferable properties of the composite fiber, the strength is not less than 8 g/d, the initial tensile resistance degree is not less than 70 g/d, and the dry heat shrinkage ($\Delta S_{150}$) is not more than 5%, which are attained by properly combining the above fiber structural properties.

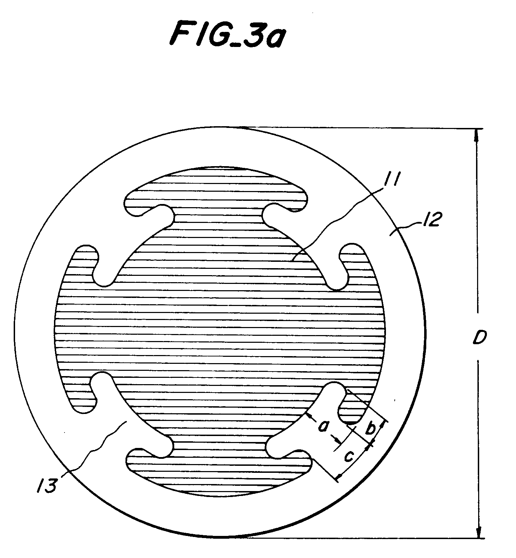

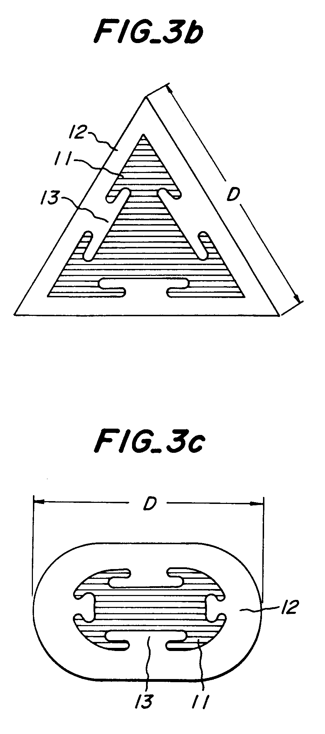

Further, the filament of the sheath-core composite structure is preferable to have such a shape that the boundary between the core portion and sheath portion is uneven and these portions are fitted and adhered to each other as shown in Figs. 3 to 4, whereby the adhesion strength at the boundary is improved.

For example, the filament shown in Fig. 3a consists of a core portion 11 (region shown by shadow lines) and a sheath portion 12 surrounding the core portion and made of a polymer material different from that of the core portion. As seen from the section of the filament, the outer peripheral surface of the core portion and the inner peripheral surface of the sheath portion have unenvennesses engaging with each other, so that the core portion 11 and the sheath portion 12 are fitted and adhered to each other.

In this case, top of each of protrusions 13 from the outer peripheral surface of the core portion and the inner peripheral surface of the sheath portion overhangs toward its both sides and fits into a concave portion of each of the outer peripheral surface of the core portion and the inner peripheral surface of the sheath portion. Further, it is favorable that a height (a) of the protrusion in the inner peripheral surface of the sheath portion as measured toward the center of the filament is 5-30% of a maximum width (D) of the filament shown by a length connecting two most remote points to each other on the profile line of the filament, and an engaging length (b) shown by a width of the protrusion overhanged toward each side is 5-30% of the filament maximum width (D), and a width (c) of base bottom of the protrusion is 5-30% of the filament maximum width (D).

Moreover, it is more favorable that each of the height (a), engaging length (b) and bottom base width (c) of the protrusion is 10-20%.

The number of the protrusions is preferable to be not less than two.

When each of a, b, c is less than 5% of the maximum width (D) in the section of the filament, the engaging part is less and the durability to the peeling of the polymer at the boundary between the core portion and the sheath portion is not sufficient. The range of each of a, b, c with respect to D is more preferably 10-20%.

For instance, when the durability is examined by using a tire cord consisting of filaments having a, b, c = 0% or a concentric circular core-sheath section, it has been confirmed that the peeling breakage at the sheath-core boundary between the polymers is apt to be caused during the running as compared with the case of using the uneven boundary.

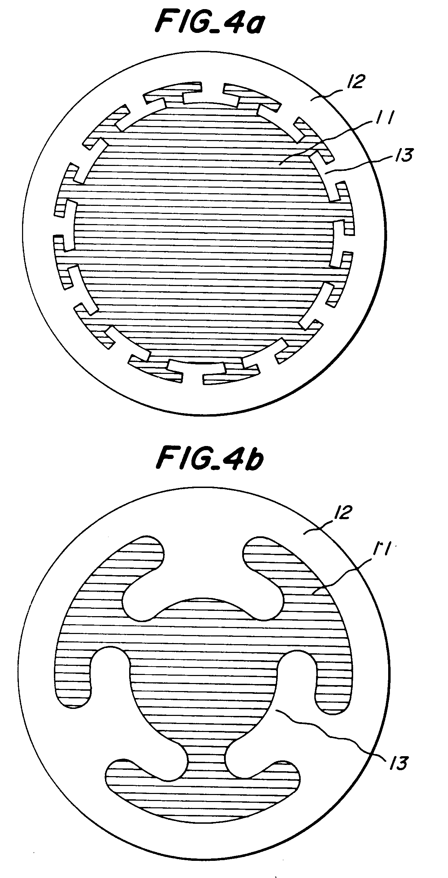

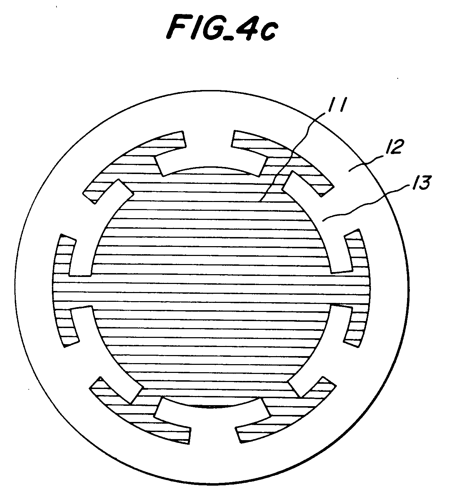

Such conditions are applicable to all of uneven sheath-core filaments as shown in Figs. 3b to 3c and Figs. 4a to 4c.

As the sectional shape of the sheath-core type structural filament, use may be made of triangle (Fig. 3b), ellipsoid (Fig. 3c) and the like in addition to the circle as shown in Fig. 3a.

Furthermore, the shape parameters a, b, c of the protrusion 13 may be preferably varied within a range of 5-30% with respect to the maximum width D, but there can be used various types such as a = b = c = 5% as shown in Fig. 4a, a = b = 20%, c = 25% as shown in Fig. 4b, a = b = c = 10% as shown in Fig. 4c and the like.

The invention will be more concretely be described in detail with reference to examples and comparative examples.

Examples 1-4, Comparative Examples 1, 2

In the formation of double structure filaments having a sheath-core composite structure, there were used two extruder type spinning machines for melt-spinning of polymers. A polymer mixture of polyethylene terephthalate (PET) and nylon-6,6 (66Ny) for core portion fused in one of the extruders and nylon-6,6 for sheath portion fused in the other extruder were introduced into composite spinning packs, respectively, from which was prepared a sheath-core type filament of 1500 denier in total denier, in which PET+66Ny was a core portion and 66Ny was a sheath portion, at a weight ratio of core/sheath of 50/50 by using an equipment similar to a spinning equipment described in Japanese Patent Application Publication No. 44-18369. In this case, the weight ratio of 66Ny to PET+66Ny was controlled by regulating a diameter of hole in the spinning orifice and a discharge amount of the polymer.

Then, the filaments of 1500 denier were twisted to form a cord of 1500 d/2 (40x40 turns/10 cm). The thus obtained cords were used as a cord of a cap layer in a radial tire having a tire size of 225/40Z R17.

This tire had a reinforcing structure that the belt layers 2, 3 were placed on the carcass layer 4 and further the cap layer 5 was placed thereon as shown in Fig. 2. The end count of cords embedded in the cap layer was 50 cords/5 cm, and steel cords (1x5x0.23 mm) were used as a cord of the belt layer. Furthermore, the carcass layer (ply layer) was 2, and rayon fiber cords were used therefor.

Tires reinforced with the above cap layer (Fig. 2) or full cap layer (Fig. 1) were manufactured by using cord layers containing 6 kinds of filaments as shown in the following Table 1, and the properties of parts in these tires and tire performances thereof were evaluated. The obtained results are shown in Table 1.

Moreover, the percentage of core portion to total of core portion and sheath portion was calculated from a density and a value of area ratio measured from a microphotograph of filament sample section.

And also, the percentage of polyamide in the core portion was calculated from a value of polyester component measured by treating the filament sample with formic acid to remove polyamide component therefrom to the above percentage of core portion.

In addition, the intrinsic viscosity of PET was measured in orthochlorophenol (25°C).

Table 1-1

| | | | Comparative Example 1 (conventional example) | Example 1 | Example 2 |
|---|---|---|---|---|---|
| Kind of polymer | core portion | PET (%) | 100 | 90 | 70 |
| | | 66Ny (%) | 0 | 10 | 30 |
| | sheath portion | | 66Ny | 66Ny | 66Ny |
| Type of cap layer structure (kind of cord in belt layer) | | | Fig. 2 (steel cord) | Fig. 2 (steel cord) | Fig. 2 (Kevlar cord [3]) |
| Intrinsic viscosity (PET) | | | 0.9 | 0.9 | 0.9 |
| Filament total denier | | | 1500d | 1500d | 1500d |
| Cord denier | | | 1500d/2 | 1500d/2 | 1500d/2 |
| Adhesion force [1] (kg/cord) | | | 2.8 | 2.9 | 2.9 |
| Tire drum test [2] High-speed test (km/h × minutes) | | | 320 km/h × 17 minutes | 350 km/h × 20 minutes | 360 km/h × 3 minutes |
| Trouble state | | | peeling between tread and cap, peeling between 66Ny-PET | tread chunk-out (rubber-rubber) | tread chunk-out peeling at belt end |

EP 0 471 088 A1

Table 1-2

| | | | Example 3 | Comparative Example 2 | Example 4 |
|---|---|---|---|---|---|
| Kind of polymer | core portion | PET (%) | 90 | 60 | 90 |
| | | 66Ny (%) | 10 | 40 | 10 |
| | sheath portion | | 66Ny | 66Ny | 66Ny |
| Type of cap layer structure (kind of cord in belt layer) | | | Fig. 1 (steel cord) | Fig. 2 (steel cord) | Fig. 2 (polyvinyl alcohol cord) |
| Intrinsic viscosity (PET) | | | 0.9 | 0.9 | 0.9 |
| Filament total denier | | | 1500d | 1500d | 1500d |
| Cord denier | | | 1500d/2 | 1500d/2 | 1500d/2 |
| Adhesion force *1 (kg/cord) | | | 3.0 | 2.8 | 3.0 |
| Tire drum test *2 High-speed test (km/h × minutes) | | | 350 km/h × 2 minutes | 330 km/h × 28 minutes | 350 km/h |
| Trouble state | | | tread chunk-out peeling at belt end | peeling between tread and cap somewhat peeling between 66Ny-PET | tread chunk-out peeling at belt end |

EP 0 471 088 A1

*1 Adhesion force: The peeling resistance when the cord is embedded in rubber and vulcanized and taken out therefrom was measured according to JIS-K-6301.

In this case, rubber having a compounding recipe shown in Table 2 was used.

*2 High-speed test: It was carried out by a step speed system according to a test method of United States Standard FMVSS. No. 109, in which speed was increased at a rate of 10 km/hr every 30 minutes until trouble was caused, during which speed (km/hr) and time (minutes) in the occurrence of trouble were measured. A load was 560 kg.

*3 Trade name of aromatic amide fiber made by DuPont.

As seen from test results of Table 1, when the composite fibers according to the invention are applied to a cord layer as a cap layer or a full cap layer, the size growth during the high-speed running was sufficiently restrained as compared with the conventional composite fiber cord (Comparative Example 1), and the high-speed durability was largely improved.

Moreover, two carcass layers reinforced with rayon fiber cords were used in the above examples, but even if the carcass layer was reinforced with the composite fiber according to the invention, it has been confirmed to considerably improve the high-speed durability.

Examples 5-7, Comparative Examples 3-4

A desired sheath-core shape was obtained in the same manner as in Example 1.

The confirmation of the sheath-core structure and value D in a, b, c of Figs. 3-4 were carried out by measuring the filament section from a photograph of scanning type electron microscope (SEM).

The percentage of core portion to total of the core portion and sheath portion, percentage of polyamide component in the core portion and intrinsic viscosity of PET were measured in the same manner as in Example 1.

The number of terminal carboxyl group (COOH) in PET was measured by dissolving 1g of PET sample in 20 ml of orthocresol, adding 40 ml of chloroform thereto after cooling and conducting potential difference titration with a solution of sodium hydroxide in methanol.

Cords made from the above filaments were used as a cord of a cap layer in a radial tire having a tire size of 195/70 R14. This tire was reinforced with belt layers placed on the carcass ply layer and further a cap layer placed thereon. The end count of cords embedded in the cap layer was 50 cords/5 cm, and steel cords (1x5x0.23 mm) were used as a cord of the belt layer. Further, the carcass ply later was one layer of PET cords (1500 d/3, 30x30).

The cord used in the cap layer was a cord made from 6 kinds of filaments shown in Table 1.

In these tires, the adhesion force of the cord was measured by the same test method as in Example 1, and also the tire drum test was conducted by a step speed system according to a test method of United States Standard FMVSS No. 109 as a high-speed test (Table 2), in which speed was increased at a rate of 8 km/hr every 30 minutes until trouble was caused, during which speed (km/hr) and time (minutes) in the occurrence of trouble were measured.

The test results are shown in Table 2.

Table 2

| | | Comparative Example 3 | Example 5 | Example 6 | Example 7 | Comparative Example 4 |
|---|---|---|---|---|---|---|
| Polymer composition of core portion (% by weight) | PET | 100 | 95 | 90 | 90 | 60 |
| | 66Ny | 0 | 5 | 10 | 30 | 40 |
| Polymer of sheath portion *1 | | 66Ny | 66Ny | 66Ny | 66Ny | 66Ny |
| Intrinsic viscosity of PET | | 0.9 | 0.9 | 0.9 | 0.9 | 0.9 |
| Number of terminal carboxyl group *2 | | 15 | 15 | 15 | 15 | 15 |
| Total denier (d) | | 1508 | 1507 | 1505 | 1502 | 1502 |
| Shape of protrusion *3 (percentage to D) | a | 10 | 10 | 10 | 10 | 10 |
| | b | 10 | 10 | 10 | 10 | 10 |
| | c | 10 | 10 | 10 | 10 | 10 |
| Number of protrusions | | 8 | 8 | 8 | 8 | 8 |
| Adhesion force (kg/cord) | | 2.7 | 2.9 | 3.0 | 2.9 | 3.0 |
| Tire drum test High-speed test (km/h × minutes) | | 193 (20) | 233 (12) | 233 (28) | 241 (20) | 209 (20) |
| Trouble state *4 | | Peeling between T-B | Peeling between T-B | Peeling between T-B | Peeling between T-B | Peeling between T-B |

*1 weight ratio of core to sheath 1:1
*2 1 unit = equivalent/106 g
*3 (a/D or b/D or c/D) × 100(%)
*4 T: tread   B: belt layer

As seen from Table 2, when values of a, b, c are within a range of 5-30%, the improvement of adhesion force and high-speed durability is observed, and particularly such an improvement becomes conspicuous at 10-20%.

Regarding a relation between % by weight of polyamide to be mixed with polyester in the core portion and high-speed durability, as % by weight of polyamide increases as shown in examples 5-7, the adhesion at the boundary between core-portion-sheath portion is enhanced, so that the high-speed running property is improved. However, in Comparative example 4, % by weight of polyamide exceeds 30% by weight, so that the high modulus and dimensional stability as a merit of polyester are lost and hence the breakage at low level is caused due to the peeling between belt-belt. It is necessary that % by weight of polyamide mixed with polyester is 1-30% by weight.

Examples 8-10, Comparative Examples 5, 6

Manufacture of tire

Cords were prepared by using each of the filaments used in Examples 5-7 and Comparative Examples 3-4 and then applied to a carcass ply layer. That is, these cords were were used at an end count of 50 cords/5 cm in each of 5 carcass layers for truck and bus tire having a tire size of 1000R20 14PR. As a belt cord were used steel cords of $3+6$ twisting structure.

The following tests were carried out with respect to these tires.

Long drum carcass durability test (Table 3)

The test tire was run on a drum of 3.5 m in diameter under normal internal pressure or a loading condition corresponding to 20% increment of the normal internal pressure over a distance of 50000 km (speed 65 km/hr), and thereafter the carcass cord was taken out from the tire and strengths of the cord at shoulder portion and bead portion were measured. The durability is indicated as a percentage value obtained by dividing the lower measured value by a value of strength of cord in non-running (retention of residual strength).

Measurement of noise (Table 3): noise on table (dB)

A table test of tire as it is was carried out according to JASO (by Journal of the Society of Automotive Engineers of Japan) C 606-81. An outline of the test according to JASO C 606-81 is shown below.

In such a test, a drum of 3 m in diameter being flat in the surface and having a rough surface of high friction coefficient was used as a substitute road surface and a testing machine provided with a tire loading device was used. Sound insulation was carried out so as to minimize noises from the testing machine and exterior as far as possible, and load and internal pressure of the tire were maximum load defined in JIS D 4202 and an air pressure corresponding thereto. A rim was a standard rim defined in JIS D 4202.

A microphone was placed at a position separated from the tire to 1 m. After the tire was trained at 60 km/hr for 30 minutes, the internal pressure and load were again adjusted and noise level (dB(A)) was measured at a speed of 30 km/hr-110 km/hr, from which an average noise level (dB(A)) over total speed was calculated. The smaller the value, the smaller the noise.

The test results are shown in Table 3.

Table 3

| | | Comparative Example 5 (control) | Example 8 | Example 9 | Example 10 | Comparative Example 6 |
|---|---|---|---|---|---|---|
| Polymer composition of core portion (% by weight) | PET | 100 | 95 | 90 | 70 | 60 |
| | 66Ny | 0 | 5 | 10 | 30 | 40 |
| Polymer of sheath portion *1 | | 66Ny | 66Ny | 66Ny | 66Ny | 66Ny |
| Intrinsic viscosity of PET | | 0.9 | 0.9 | 0.9 | 0.9 | 0.9 |
| Number of terminal carboxyl group *2 | | 15 | 15 | 15 | 15 | 15 |
| Total denier (d) | | 1508 | 1507 | 1505 | 1502 | 1502 |
| Shape of protrusion *3 (percentage to D) | a | 10 | 10 | 10 | 10 | 10 |
| | b | 10 | 10 | 10 | 10 | 10 |
| | c | 10 | 10 | 10 | 10 | 10 |
| Number of protrusions | | 8 | 8 | 8 | 8 | 8 |
| Long running on drum durability of carcass | | 100 | 110 | 118 | 113 | 90 |
| Separation state of core-sheath *4 | | presence | none | none | none | none |
| Noise on table (dB) | | 0 | +0.2 | -0.1 | -0.1 | +0.6 |

*1 weight ratio of core to sheath 1:1
*2 1 unit = equivalent/106 g
*3 (a/D or b/D or c/D) × 100(%)
*4 After completion of long running on drum, tire is cut and section of cord is observed by SEM, whereby it is confirmed whether or not the boundary is separated.

As seen from Table 3, when the sheath-core type filament is applied to the carcass ply of the truck and bus tire, it has been confirmed that if polyamide is mixed with polyester in an amount of up to 30% by weight as a whole, the durability of carcass cord is largely improved as compared with Comparative Example 5, but if it exceeds 30% by weight, the durability is rather lowered. Furthermore, the separation at the boundary between core and sheath occurs in Comparative example 5 in which the core portion does not contain polyamide, while the separation does not occur in Examples 8-10 according to the invention. Moreover, the noise level is low in the tires of Examples 8-10, so that tires having excellent durability and low noise are obtained.

INDUSTRIAL APPLICABILITY

As shown in the above examples and comparative examples, the pneumatic radial tires according to the invention have effects that the peeling at the boundary between core and sheath is largely restrained to increase the adhesion force by using cords each made of sheath-core type filaments in which the core portion is a polymer mixture of polyester and polyamide with a particular mixing ratio and the sheath portion consists essentially of polyamide as a cap layer and/or a carcass ply layer, and that when the filament is used in the cap layer, the size growing amount during high-speed running is considerably suppressed to highly improve the durability, particularly high-speed durability, and that when the filament is used in the carcass ply layer, the durability of the carcass cord is largely improved and further the noise level is reduced.

**Claims**

1. A pneumatic radial tire comprising at least one carcass ply containing cords arranged substantially in a radial direction, plural belt layers, a tread layer, and a reinforcing layer as a cap layer located between the belt layer and the tread layer and containing cords arranged in parallel to the circumferential direction of the tire and covering at least each end portion of the belt layer, characterized in that at least one layer of the carcass plies and/or the cap layer is formed by embedding in rubber cords obtained by twisting filaments of a sheath-core structure consisting of a core portion and a sheath portion of a polymer different from a polymer constituting the core portion, and the polymer constituting the core portion is a mixture of 70-99% by weight of polyester and 30-1% by weight of polyamide, and the polymer constituting the sheath portion is a polymer containing at least 70% by weight of polyamide, and the core portion occupies in an amount of 30-90% by weight with respect to a total weight of the core portion and sheath portion.

2. The pneumatic radial tire according to claim 1, wherein said filament having a sheath-core structure has such a structure that the outer peripheral surface of the core portion and the inner peripheral surface of the sheath portion have unenvennesses engaging with each other so as to fit and adhere the core portion and the sheath portion to each other.

3. The pneumatic radial tire according to claim 2, wherein top of each of protrusions from the outer peripheral surface of the core portion and the inner peripheral surface of the sheath portion in a section of said filament overhangs toward its both sides and fits into a concave portion of each of the outer peripheral surface of the core portion and the inner peripheral surface of the sheath portion, and a height (a) of the protrusion in the inner peripheral surface of the sheath portion as measured toward the center of the filament is 5-30% of a maximum width (D) of the filament shown by a length connecting two most remote points to each other on the profile line of the filament, and an engaging length (b) shown by a width of the protrusion overhanged toward each side is 5-30% of the filament maximum width (D), and a width (c) of base bottom of the protrusion is 5-30% of the filament maximum width (D).

4. The pneumatic radial tire according to claim 3, wherein each of said height (a), engaging length (b) and bottom base width (c) of the protrusion is 10-20%.

5. The pneumatic radial tire according to claim 1, wherein said tire comprises at least one carcass layer reinforced with rayon fiber cords and a belt layer arranged outside said carcass layer and in a crown portion inside said tread and containing cords arranged at a cord angle of 10-40° with respect to the circumferential direction of the tire, and said belt layer is reinforced with aromatic polyamide fiber cords having a strength of not less than 10 g/d, steel cords and/or polyvinyl alcohol fiber cords having a strength of not less than 15 g/d.

## FIG_1

## FIG_2

EP 0 471 088 A1

# FIG_3a

16

# FIG_3b

# FIG_3c

## FIG_4a

## FIG.4b

# FIG.4c

# INTERNATIONAL SEARCH REPORT

International Application No PCT/JP91/00286

**I. CLASSIFICATION OF SUBJECT MATTER** (if several classification symbols apply, indicate all) [4]

According to International Patent Classification (IPC) or to both National Classification and IPC

Int. Cl$^5$  B60C9/08, 9/18, D02G3/48, D01F8/12

**II. FIELDS SEARCHED**

| Minimum Documentation Searched [7] | |
|---|---|
| Classification System | Classification Symbols |
| IPC | B60C9/00, 9/08, 9/18, D02G3/48, D01F8/12, 8/14, D01D5/34 |

Documentation Searched other than Minimum Documentation
to the Extent that such Documents are Included in the Fields Searched [8]

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 2-61129 (Sumitomo Rubber Industries, Ltd.), March 1, 1990 (01. 03. 90), Claims 1, 3, 4, Figs. 1, 2 (Family: none) | 1, 5 |
| A | JP, A, 53-28725 (Asahi Chemical Industry Co., Ltd.), March 17, 1978 (17. 03. 78), Lines 2 to 4, lower left column, page 3, lines 1 to 11, lower left column, page 5 (Family: none) | 1 |
| A | JP, A, 63-214485 (Toray Industries, Inc.), September 7, 1988 (07. 09. 88), Lines 1 to 13, lower right column, page 3, Fig. 2 (Family: none) | 2, 3, 4 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 15, 1991 (15. 05. 91) | May 27, 1991 (27. 05. 91) |
| International Searching Authority | Signature of Authorized Officer |
| Japanese Patent Office | |

Form PCT/ISA/210 (second sheet) (January 1985)